# EUROPEAN PATENT APPLICATION

(11) **EP 0 857 615 A1**
(43) Date of publication of application: **12.08.1998**
(21) Application number: 98300881.4
(22) Date of filing: 06.02.1998
(51) Int. Cl.: B60R 13/04

(54) **Roof ditch moulding**

(30) Priority: 07.02.1997 GB 9702520
(71) Applicant: THE STANDARD PRODUCTS COMPANY, Cleveland Ohio 44102 (US)
(72) Inventor: Keys, James Frederick, Saint Neots, Cambridgeshire, PE19 3AB (GB)
(74) Representative: Jones, Michael Raymond

(57) **Abstract**

There is disclosed a moulding suitable for locating in a roof ditch of a motor vehicle, the moulding comprising:
a bridge 20 which is formed of a relatively soft elastomeric or rubber material and is intended to span the ditch in an upper region of the ditch;
a double-sided adhesive tape 26 spaced from the bridge 20, and having first 27 and second 28 regions intended to be secured to the central and outer regions of the base of the ditch;
a first pillar 24 formed of a relatively hard elastomeric or rubber material and intended to extend between the second region of the tape 28 and an outer region 22 of the bridge 20;
a pad 29 formed of a relatively soft elastomeric or rubber material and covering at least the first part of the tape 27; and
a second pillar 23 formed of a relatively hard elastomeric or rubber material and located under a central region of the bridge 20 and capable of contacting the pad 29.

## Description

This invention relates to a roof ditch moulding. In many modern vehicles, in particular cars, a ditch is created in the region where a roof pressing and a body side pressing are brought together and spot welded. The spot welding takes the form of a series of welds at spaced intervals along the line of the ditch, in the region of the base of the ditch. The welding invariably leads to some variation in the finish at the base of the ditch; in fact, viewed from the exterior of the vehicle the welds usually appear as a series of depressions along the base of a ditch, with the welds generally being in the middle of the ditch and with the outer 3 or 4 mm of the ditch having a smooth surface.

It is now current practice to provide a moulding intended to be fitted to the vehicle so as to hide the ditch, this being desirable so as to provide a smooth outer appearance, which is important from the aesthetic view point and also from the point of view of minimising wind noise and reducing wind resistance.

Various schemes have been employed to secure the moulding in relation to a roof ditch. In one such arrangement weld studs are provided along the base of the ditch and then a roof ditch moulding, with suitable recesses in which the heads of the weld studs can be located, is secured relative to the ditch; however, in view of the spot welding the weld studs can be at different heights or different lateral locations and a consequence is that the moulding tends to follow the height of the weld studs and thus undulate along its length. In another known arrangement a roof ditch moulding is provided with a double-sided adhesive tape in its base region with the tape being secured to the base of the ditch, but as with the first-mentioned known arrangement the tape rises and falls following the uneven course of the central region of the base of the ditch and a consequence is that the upper surface of the moulding also undulates accordingly. In a third known arrangement the lower side of the moulding is spaced from the base of the ditch and thus the problem associated with the first two known arrangements is obviated. However, to secure the moulding in the third arrangement the moulding needs regions which overlap the roof pressing and body side pressing by a considerable amount, at least 7 mm on each side, so that double-sided adhesive tapes can be applied between those overlying regions of the roof ditch moulding and the roof pressing and body side pressing, so as to secure the moulding in place. Such an arrangement results in a moulding which is wider than desired from the aesthetic and wind reduction points of view.

According to one aspect of the present invention, there is provided a moulding suitable for locating in a roof ditch of a motor vehicle, which ditch has a base which is uneven in a central region running in the direction of the ditch but which is smooth in an outer region parallel to the central region, the moulding comprising:
a bridge which is formed of a relatively soft elastomeric or rubber material and is intended to span the ditch in an upper region of the ditch;
a double-sided adhesive tape spaced from the bridge, and having first and second regions intended to be secured to the central and outer regions of the base of the ditch;
a first pillar formed of a relatively hard elastomeric or rubber material and intended to extend between the second region of the tape and an outer region of the bridge;
a pad formed of a relatively soft elastomeric or rubber material and covering at least the first part of the tape; and
a second pillar formed of a relatively hard elastomeric or rubber material and located under a central region of the bridge and capable of contacting the pad;
the arrangement being such that, during location of the moulding in the roof ditch, pressure can be applied to the bridge and via the first and second pillars to the adhesive tape so as to cause the tape to adhere to the central and outer regions of the base of the ditch, but in the absence of such pressure there is a gap present or capable of being present between the second pillar and the pad so as to prevent any unevenness in the surface of the base being transmitted to a central region of the bridge.

Preferably the double-sided adhesive tape is at least 7mm wide.

Preferably the double-sided adhesive tape has a removable covering on the opposite side of the tape to that to which the first pillar and the pad are secured.

From a practical point of view, it is convenient for the pad to be directly attached to the first pillar.

In the case in which the ditch becomes less deep at one end, the moulding may have a predetermined length and at one end region the moulding may be tapered in the vertical sense. In this case, conveniently the first pillar reduces towards the tapered end. Where appropriate the height of the second pillar may also reduce towards the tapered end.

Another aspect of the present invention provides a vehicle having a roof ditch, in which is located and secured a moulding according to the first-mentioned aspect of the present invention.

The bridge of the moulding may be wider than the width of the roof ditch with the bridge extending over the roof. In fact, the bridge of the moulding may extend over the roof by less than 7mm.

If desired, the bridge of the moulding can abut the sides of the roof ditch on one or both sides.

A sealant may be present at the base of the roof ditch.

Conveniently the elastomeric or rubber components of the moulding are manufactured by extrusion.

For a better understanding of the present invention and to show how the same may be carried into effect, reference will now be made, by way of example, to Figures 1 to 4 of the accompanying drawings, in which:
Figure 1 is a side view of a motor vehicle which indicates the position in which the moulding, in accordance with the present invention, may be positioned;
Figure 2 is an enlarged cross section view along the line II-II indicated in Figure 1;
Figure 3 is an enlarged cross section view of part of what is shown in Figure 2 with one embodiment of a moulding in accordance with the present invention in position; and
Figure 4 is a perspective view of a moulding which has been cut so as to taper at one end.

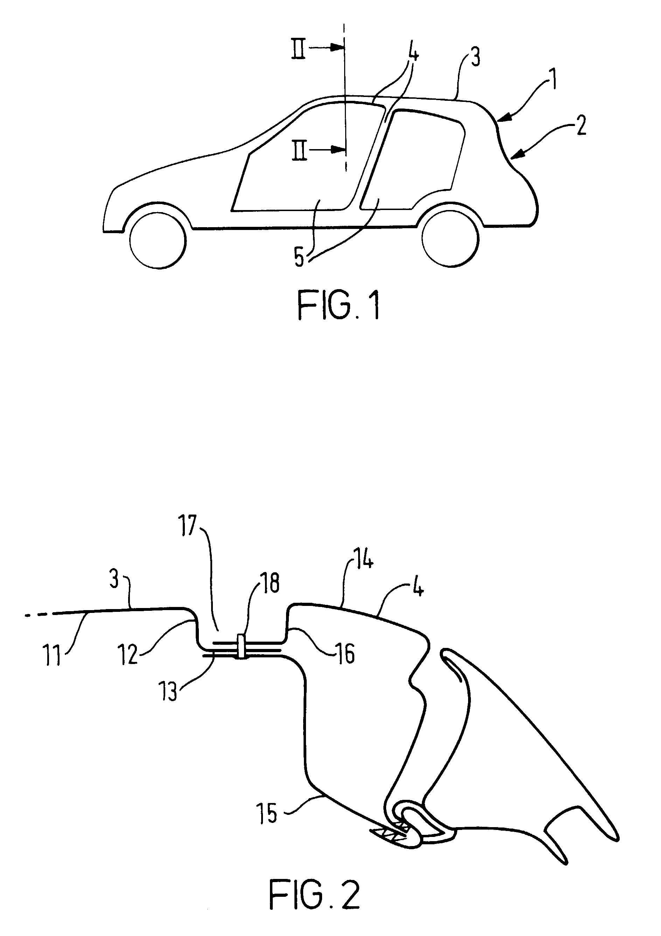

Referring firstly to Figure 1, there is shown a vehicle 1 which has a body 2, which includes a roof 3. The body of the vehicle has two sides 4 wherein are positioned doors 5.

Figure 2 shows the attachment between one body side 4, and the roof 3. The roof is made from a roof pressing which has a generally horizontal portion 11, which curves to form a vertical lip 12, and then curves again to extend in a generally horizontal plane 13. The body side 4 is made from a body side pressing which has two components 14 and 15, which are secured together at one end to form a flange, and which at the other end sandwich together the generally horizontal end portion 13 of the roof pressing 13, the sandwich being secured by spot welds 18 at intervals along a central region of the base of the ditch. One of the body side components 14, is curved to form a generally vertical lip 16 which, together with the roof lip 12, partially define a roof ditch 17.

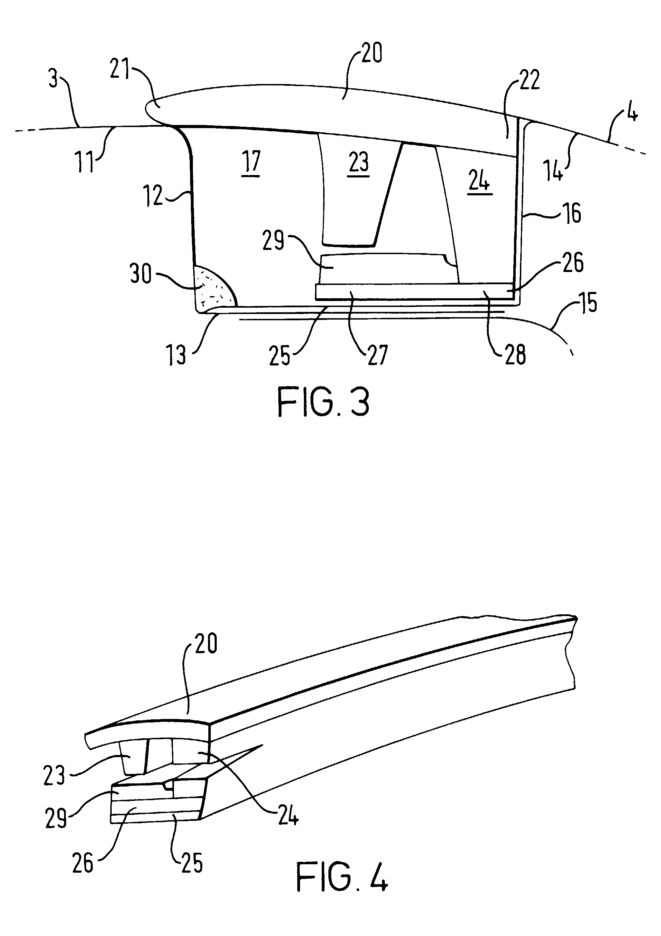

Figure 3 shows such a roof ditch 17 with a moulding of the present invention in position. The moulding has a bridge 20, which extends between the roof pressing 3, and the body side pressing 4, in the upper area of the roof ditch. The end 21 of the bridge 20 in contact with the roof pressing 3 lies along the roof line, above the top of the lip 12 of the roof side pressing 3. The other end 22 of the bridge 20 directly abuts the vertical lip 16 of the body side pressing 4. The moulding also has two rigid pillars 23 and 24. One of the pillars 23 is attached to the central region of the bridge, extends down into the ditch, and is unattached at the other end. The other pillar 24 is attached to the outer region 22 of the bridge 20, extends down into the ditch and is attached to the base of the ditch by a double-sided adhesive tape 26. The adhesive tape 26 has two regions 27 and 28; the first region 27, extends over the central area of the roof ditch base 25, and the second region 28 extends over the outer region of the roof ditch base up to the lip 16 of the body side pressing 4. The moulding also has a pad 29, which is attached to the central area of the roof ditch base 25, by the first region of the adhesive tape 27. Sealant 30 is provided in a corner region of the roof ditch base near the curved part of the roof pressing 12.

The pad 29 is relatively soft and can follow the uneven central regions of the base 25 of the ditch 17, via the tape 26.

In practice, to fit the moulding in the ditch, the moulding is located appropriately and pressure is applied to the bridge 20 to act via the pillars 23 and 24 to cause the tape 26 to adhere to the base 25 of the ditch. The pillar 23 acts via the pad 29 but, when pressure is released, the pillar 23 becomes slightly spaced from the pad 29 so that unevenness in the latter is not transmitted to the pillar 23 and hence to the bridge 20.

Figure 4 shows a moulding is which a wedge of the first pillar 24, has been excised. A moulding which is tapered at one end can thus be produced by adhering the cut surfaces together.

## Claims

1. A moulding suitable for locating in a roof ditch of a motor vehicle, which ditch has a base which is uneven in a central region running in the direction of the ditch but which is smooth in an outer region parallel to the central region, the moulding comprising:
a bridge which is formed of a relatively soft elastomeric or rubber material and is intended to span the ditch in an upper region of the ditch;
a double-sided adhesive tape spaced from the bridge, and having first and second regions intended to be secured to the central and outer regions of the base of the ditch;
a first pillar formed of a relatively hard elastomeric or rubber material and intended to extend between the second region of the tape and an outer region of the bridge;
a pad formed of a relatively soft elastomeric or rubber material and covering at least the first part of the tape; and
a second pillar formed of a relatively hard elastomeric or rubber material and located under a central region of the bridge and capable of contacting the pad;
the arrangement being such that, during location of the moulding in the roof ditch, pressure can be applied to the bridge and via the first and second pillars to the adhesive tape so as to cause the tape to adhere to the central and outer regions of the base of the ditch, but in the absence of such pressure there is a gap present or capable of being present between the second pillar and the pad so as to prevent any unevenness in the surface of the base being transmitted to a central region of the bridge.

2. A moulding according to claim 1, in which the double-sided adhesive tape is at least 7mm wide.

3. A moulding according to claim 1 or 2, in which the double-sided adhesive tape has a removable covering on the opposite side of the tape to that to which the first pillar and the pad are secured.

4. A moulding according to claim 1, 2 or 3, in which the pad is directly attached to the first pillar.

5. A moulding according to any preceding claim, in which the moulding has a predetermined length and at one end region the moulding is tapered in the vertical sense.

6. A moulding according to claim 5, in which the height of the first pillar reduces towards the tapered end.

7. A moulding according to claim 6, in which the height of the second pillar reduces towards the tapered end.

8. A moulding substantially as hereinbefore described with reference to, and as illustrated in, Figures 3 and 4 of the accompanying drawings.

9. A vehicle having a roof ditch, in which is located and secured a moulding according to any one or more of the preceding claims.

10. A vehicle according to claim 9, in which the bridge of the moulding is wider than the width of the roof ditch and the bridge extends over the roof.

11. A vehicle according to claim 10, in which the bridge of the moulding extends over the roof by less than 7mm.

12. A vehicle according to claim 9, in which the bridge of the moulding abuts the sides of the roof ditch on one or both sides.

13. A vehicle according to any one of claims 9 to 12, in which a sealant is present at the base of the roof ditch.

14. A method of manufacturing a moulding according to any one or more of claims 1 to 8, in which the elastomeric or rubber components of the moulding are manufactured by extrusion.
